Europäisches Patentamt

European Patent Office

Office européen des brevets

(11) Veröffentlichungsnummer: **0 103 678**
**B1**

# EUROPÄISCHE PATENTSCHRIFT

(45) Veröffentlichungstag der Patentschrift:
14.05.86

(51) Int. Cl.⁴: **B 60 K 26/02**

(21) Anmeldenummer: **83105698.1**

(22) Anmeldetag: **10.06.83**

(54) **Gaspedal für ein Strassenfahrzeug.**

(30) Priorität: **17.09.82 DE 3234479**

(43) Veröffentlichungstag der Anmeldung:
**28.03.84 Patentblatt 84/13**

(45) Bekanntmachung des Hinweises auf die Patenterteilung:
**14.05.86 Patentblatt 86/20**

(84) Benannte Vertragsstaaten:
**DE FR GB IT NL SE**

(56) Entgegenhaltungen:
**DE - A - 2 605 900**
**DE - A - 2 723 562**
**DE - A - 2 735 695**
**GB - A - 1 549 178**
**US - A - 2 332 064**
**US - A - 4 333 070**

**AUTOMOBILTECHNISCHE ZEITSCHRIFT, Band 83,
Nr.4, 1981, Stuttgart E.FIALA ″Die Schalt- und
Verbrauchsanzeige″, Seiten 147-149**

(73) Patentinhaber: **WABCO Westinghouse
Fahrzeugbremsen GmbH, Am Lindener
Hafen 21 Postfach 91 12 80, D-3000 Hannover 91 (DE)**

(72) Erfinder: **Der Erfinder hat auf seine Nennung verzichtet**

(74) Vertreter: **Schrödter, Manfred, WABCO Westinghouse
Fahrzeugbremsen GmbH Am Lindener
Hafen 21 Postfach 91 12 80, D-3000 Hannover 91 (DE)**

ACTORUM AG

## Beschreibung

Die Erfindung bezieht sich auf ein Gaspedal für ein Strassenfahrzeug gemäss dem Oberbegriff des Patentanspruchs 1.

Bei Kraftfahrzeugen und besonders bei Nutzfahrzeugen ist man bestrebt, den Kraftstoffverbrauch möglichst niedrig zu halten. Neben anderen Einflussgrössen wird der Verbrauch wesentlich von der Fahrweise, und zwar insbesondere in den Beschleunigungsphasen, bestimmt. Es ist festgestellt worden, dass der Verbrauch dann am günstigsten ist, wenn in einem möglichst hohen Gang, also bei niedriger Drehzahl mit nahezu Vollgas beschleunigt wird, bis dann bei möglichst niedriger Drehzahl wiederum in den darauf folgenden höheren Gang geschaltet wird. [ATZ 83 (1981) 4, Seite 147-149.] Bei dieser Fahrweise, die aber nur bei betriebswarmem Motor zu empfehlen ist, befindet sich der Motor stets in der Nähe des Betriebspunktes des minimalen spezifischen Verbrauchs bzw. des höchsten Wirkungsgrades.

Es ist bereits ein Gaspedal für ein Strassenfahrzeug gemäss dem Oberbegriff des Anspruchs 1 bekannt (DE-A1-2 735 695), das zur Erzielung einer wirtschaftlichen Fahrweise einen vom Fahrer spürbaren Gegendruck aufweist. Der Einsatzpunkt und die Stärke dieses Gegendruckes stellen sich in Abhängigkeit vom Unterdruck und von der Motordrehzahl selbständig ein. In der genannten Schrift ist jedoch nicht offenbart, wie der Gegendruck auf das Gaspedal erzeugt wird.

Der Erfindung liegt die Aufgabe zugrunde, eine vorteilhafte Ausführung des eingangs genannten Gaspedals anzugeben.

Diese Aufgabe wird durch die im Patentanspruch 1 enthaltenen Merkmale gelöst. Die Unteransprüche enthalten zweckmässige Weiterbildungen der Erfindung.

Ein Vorteil der Erfindung liegt darin, dass dem Fahrer eine Empfehlung zur frühzeitigen Gangumschaltung gegeben werden kann. Bei einem Fahrzeug mit Automatik-Getriebe kann auch ein bevorstehender Gangwechsel angekündigt werden.

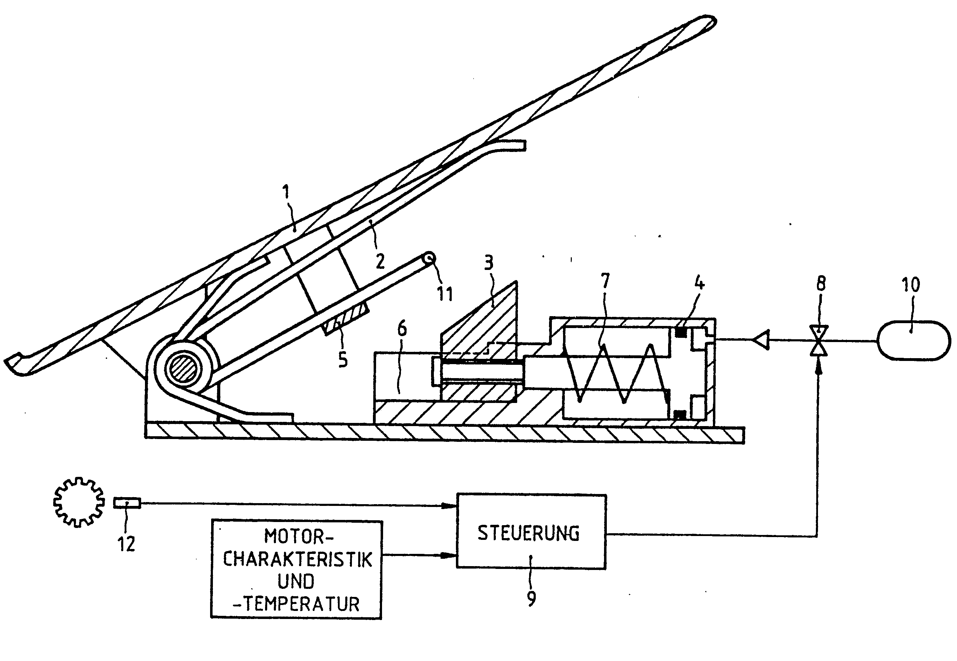

In der Zeichnung ist ein Ausführungsbeispiel der Erfindung schematisch dargestellt.

Unter einem Gaspedal ist eine haarnadelförmige vorgespannte Feder 2 eingebaut, die sich an einer Lasche 5 abstützt. Sobald beim Niederdrücken des Gaspedals 1 das Ende 11 der Feder 2 einen Keil 3 berührt, ist vom Fahrer ein Druckpunkt zu verspüren. Dieser kann jedoch durch weiteres Niederdrücken des Gaspedals 1 mit etwas höherer Pedalkraft überwunden werden, wobei sich die Feder 2 zusammenbiegt.

Durch waagerechtes Verschieben des Keils 3 auf einer Gleitbahn 6 lässt sich der Druckpunkt nach vorn (in der Zeichnung links) oder hinten verschieben. Dies erfolgt mittels eines Kolbens 4, der durch eine Feder 7 in die hintere Endlage gedrückt wird. Der Kolben 4 lässt sich mittels Druckluft aus einem Vorratsbehälter 10, deren Druck über ein Ventil 8 verstellbar ist, verschieben.

Das Ventil 8 ist durch eine elektronische Steuerung 9 verstellbar. Die Verstellung erfolgt hauptsächlich in Abhängigkeit von der Motordrehzahl, die mittels eines Drehzahlsensors 12 erfasst wird. Weiterhin wird der Steuerung 9 eine Information über die Motorcharakteristik, d.h. den Typ des verwendeten Motors mitgeteilt. Dies ist unter anderem notwendig, da die minimal zulässigen Drehzahlen der verschiedenen Motoren unterschiedlich sind. Weiterhin ist eine Information über die Motortemperatur zweckmässig, um einen noch nicht betriebswarmen Motor nicht zu überlasten.

Die Steuerung 9 ist so programmiert, dass sich der Keil 3 bzw. der Druckpunkt am Gaspedal 1 stets an der Stelle des höchsten Motorwirkungsgrades befindet. Zum Beginn des Gasgebens kann der Druckpunkt ganz nach vorn, d.h. in der Zeichnung nach links, gelegt werden, so dass er vom Fahrer sofort zu spüren ist. Der Druckpunkt wandert dann zügig zum Punkt des höchsten Wirkungsgrades und wird durch weiteres Verschieben dort gehalten. Diese Bewegung kann vom Fahrer leicht nachgefahren werden. Hierdurch kommt ein im Hinblick auf den Kraftstoffverbrauch optimales Beschleunigen des Fahrzeugs zustande.

Gemäss einer Weiterbildung der Erfindung kann der Fahrer über das Gaspedal eine Gangumschaltempfehlung erhalten. Hierzu wird durch die Steuerung 9, sobald eine entsprechende Drehzahl erreicht ist und die Lastbedingungen eine Umschaltung zulassen, der Keil 3 leicht zurückbewegt (nach links). Hierdurch erkennt der Fahrer, ohne vom Verkehr abgelenkt zu werden, dass ein Hochschalten zweckmässig ist. Die gleiche Wirkung kann auch durch einen kurzen Impuls, d.h. eine Hin- und Herbewegung, der auf den Keil 3 gegeben wird, erzielt werden.

Die Erfindung ist bei allen mit Otto- oder Dieselmotoren ausgerüsteten Fahrzeugen anwendbar. Besonders zweckmässig ist eine Anwendung bei Nutzfahrzeugen, die gegenüber Personenkraftwagen untermotorisiert sind und mehr Gänge aufweisen. Hier dauert die Beschleunigungsphase bedeutend länger und es kann deshalb besonders viel Kraftstoff eingespart werden.

## Patentansprüche

1. Gaspedal (1) für ein Strassenfahrzeug mit von Hand oder automatisch geschaltetem Getriebe, wobei in Abhängigkeit von Motordaten ein Gegendruck auf das Gaspedal erzeugt wird, dessen Einsatzpunkt und Stärke sich selbständig in Abhängigkeit von den vorhandenen Fahrbedingungen so einstellt, dass ein verbrauchsgünstiger Motorbetriebspunkt eingehalten wird, gekennzeichnet durch folgende Merkmale:

a) das Gaspedal weist einen Kraftdruckpunkt auf, der durch eine von der Motordrehzahl, der Motortemperatur und der Motorcharakteristik beeinflusste elektronische Steuerung (9) verschiebbar ist,

b) der Kraftdruckpunkt wird durch eine vorgespannte Feder (2) und einen verschiebbaren Keil (3) gebildet,

c) der Keil (3) ist pneumatisch durch einen federbelasteten Kolben (4) verstellbar.

2. Gaspedal nach Anspruch 1, dadurch gekennzeichnet, dass der Keil (3) beim Beginn des Gasgebens am Ende (11) der Feder (2) anliegt und sich bei fortschreitender Beschleunigung des Fahrzeugs zum verbrauchsgünstigsten Punkt hin verschiebt.

3. Gaspedal nach Anspruch 1 und 2, dadurch gekennzeichnet, dass zur Umschaltempfehlung oder zur Ankündigung einer bevorstehenden Umschaltung eines Automatikgetriebes der Keil (3) durch den Kolben (4) zurückgeschoben wird oder einen Impuls erhält.

## Claims

1. Accelerator pedal (1) for a road vehicle having manual or automatic transmission, in which, as a function of engine data, a counter-pressure is exerted on the accelerator pedal the starting point and strenght of which are adjusted automatically in accordance with the prevailing conditions of travel in such a manner that an engine operating point which is advantageous in terms of consumption is maintained, characterised by the following features:
a) the accelerator pedal has a force pressure point which can be displaced by an electronic control system (9) which is influenced by the speed, temperature and characteristic properties of the engine,
b) the force pressure point is formed by a prestressed spring (2) and a displaceable wedge (3),
c) the wedge (3) can be displaced pneumatically by means of a spring-loaded piston (4).

2. Accelerator pedal according to claim 1, characterised in that, at the start of acceleration, the wedge (3) rests against the end (11) of the spring (2) and, as the vehicle continues to accelerate, is displaced towards the point that gives the most advantageous consumption.

3. Accelerator pedal according to claims 1 and 2, characterised in that, in order to recommend a gear change or to indicate an imminent gear change in the case of automatic transmission, the wedge (3) is pushed back by the piston (4) or receives a pulse.

## Revendications

1. Pédale d'accélérateur (1) pour un véhicule routier à boîte de vitesses manuelle ou automatique, où, en fonction de données du moteur, se produit sur la pédale d'accélérateur une contre-pression dont le point d'application et l'intensité se règlent automatiquement en fonction des conditions de conduites existantes de façon à rester sur un point d'exploitation du moteur favorable au point de vue consommation, caractérisée par les propriétés suivantes:
a) la pédale d'accélérateur présente un point où s'exerce une pression et que peut faire coulisser un dispositif électronique de commande (9) influencé par la vitesse de rotation du moteur, la température du moteur et la caractéristique du moteur,
b) le point où s'exerce une pression est constitué par un ressort précontraint (2) et un coin coulissant (3),
c) un piston (4) rappelé par un ressort peut déplacer pneumatiquement le coin (3).

2. Pédale d'accélération selon la revendication 1, caractérisée en ce qu'au début du coup d'accélérateur, le coin (3) s'appuie contre l'extrémité (11) du ressort (2) et, lorsque le véhicule continue à accélérer, coulisse en direction du point le plus favorable au point de vue consommation.

3. Pédale d'accélération selon la revendication 1 ou la revendication 2, caractérisée en ce que, pour recommander au conducteur de changer de vitesse ou bien pour lui annoncer que le changement de vitesse d'une boîte automatique va se produire, le coin (3) est rappelé par le piston (4) ou reçoit une impulsion.

MOTOR-
CHARAKTERISTIK
UND
-TEMPERATUR

STEUERUNG

0 103 678